# EUROPÄISCHE PATENTSCHRIFT

(11) **EP 3 299 291 B1**
(45) Veröffentlichungstag und Bekanntmachung des Hinweises auf die Patenterteilung: **08.04.2020**
(21) Anmeldenummer: 16190269.7
(22) Anmeldetag: 23.09.2016
(51) Int. Cl.: B64C 39/02

(54) **UNBEMANNTES FLUGGERÄT**
UNMANNED AIRCRAFT
AERONEF SANS PILOTE

(43) Veröffentlichungstag der Anmeldung: 28.03.2018
(73) Patentinhaber: microdrones GmbH, 57078 Siegen (DE)
(72) Erfinder: Halgasik, Jaroslav, 57258 Freudenberg (DE)
(74) Vertreter: Glawe, Delfs, Moll

(56) Entgegenhaltungen:
- GB-A- 2 490 141
- US-A1- 2011 301 784
- US-A1- 2013 256 464
- US-A1- 2014 061 376
- US-A1- 2016 144 734

## Beschreibung

Die Erfindung betrifft ein unbemanntes Fluggerät mit einem Energiespeicher, der lösbar mit einem Strukturbauteil des Fluggeräts verbunden ist. Das Fluggerät umfasst einen Speicherstecker, über den Energie von dem Energiespeicher zu einem Rotorantrieb des Fluggeräts geleitet wird. Die Erfindung betrifft außerdem einen Energiespeicher für ein solches Fluggerät sowie ein Verfahren zum Anschließen eines Energiespeichers an ein solches Fluggerät.

Eingesetzt werden solche unbemannten Fluggeräte beispielsweise für Überwachungsaufgaben, für Kameraaufnahmen oder für den Transport von kleinen Gütern. Die Flugdauer der Fluggeräte ist durch die Kapazität des Energiespeichers begrenzt. Es besteht insoweit einen Konflikt zwischen der Reichweite des Fluggeräts und der Nutzlast. Mit einer erhöhten Speicherkapazität erhöht sich auch das Gewicht des Energiespeichers, wodurch die Nutzlast vermindert wird. Um mehrere Einsätze kurz hintereinander fliegen zu können, ist der Energiespeicher lösbar mit einem Strukturbauteil des Fluggeräts verbunden. So kann bei einer kurzen Zwischenlandung der leere Energiespeicher von dem Fluggerät entfernt und durch einen gefüllten Energiespeicher ersetzt werden.

Das Auswechseln des Energiespeichers umfasst grundsätzlich zwei Aspekte. Erstens muss die mechanische Verbindung zwischen dem Energiespeicher und dem Strukturbauteil gelöst bzw. hergestellt werden. Zweitens muss der Versorgungsanschluss zwischen dem Energiespeicher und dem Strukturbauteil gelöst bzw. hergestellt werden, über den Energie aus dem Energiespeicher entnommen werden kann. Fehler bei einem der Schritte können schwerwiegende Folgen haben. Sowohl ein Fehler in der mechanischen Verbindung als auch ein Fehler in der Versorgungsverbindung kann dazu führen, dass das Fluggerät abstürzt.

Aus US 2014/0061376 A1 ist ein unbemanntes Fluggerät mit einer widerstandsfähigen integrierten Batterie bekannt. Die GB 2490141 A offenbart ein weiteres Beispiel eines unbemannten Fluggeräts mit einer austauschbaren Batterie.

Der Erfindung liegt die Aufgabe zugrunde, ein Fluggerät mit verbesserter Betriebssicherheit sowie ein zugehöriges Verfahren und einen zugehörigen Energiespeicher vorzustellen. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Erfindungsgemäß umfasst das Fluggerät ein Verriegelungselement, das in einer Betriebsposition den Energiespeicher relativ zu dem Strukturbauteil verriegelt und das in einer Wartungsposition den Energiespeicher freigibt und einen Volleingriff des Speichersteckers blockiert. Eine Steckersicherung ist dazu ausgelegt, den Speicherstecker im verbundenen Zustand zu sichern, wobei die Steckersicherung auf ihrem Weg an dem Verriegelungselemnt anstößt, wenn das Verriegelungselement in der Wartungsposition ist.

Die Erfindung hat erkannt, dass es mit einem solchen Verriegelungselement möglich ist, mehrere sicherheitsrelevante Funktionen miteinander zu kombinieren. So ist es nicht möglich, einen Volleingriff des Speichersteckers herzustellen, wenn nicht zugleich der Energiespeicher auch mechanisch verriegelt ist. Durch die Kombination der beiden Sicherheitsmechanismen kann mit einem Blick kontrolliert werden, ob der Energiespeicher ordnungsgemäß eingesetzt und angeschlossen ist. Insbesondere kann durch die Kombination der beiden Sicherheitsmechanismen zuverlässig verhindert werden, dass der Speicherstecker sich unbeabsichtigt löst.

Zwischen dem Energiespeicher und dem Strukturbauteil des Fluggeräts kann eine mechanische Verbindung vorgesehen sein, durch die der Energiespeicher relativ zu dem Strukturbauteil gehalten wird. Die mechanische Verbindung kann so gestaltet sein, dass ausgehend vom verbundenen Zustand der Energiespeicher zunächst eine lineare Bewegung relativ zu dem Strukturbauteil durchführt, um von dem Strukturbauteil gelöst zu werden. Das Verriegelungselement kann so gestaltet sein, dass es in seiner Betriebsposition die lineare Bewegung sperrt und in seiner Wartungsposition die lineare Bewegung freigibt.

Die mechanische Verbindung kann so gestaltet sein, dass in dem Strukturbauteil eine Öffnung ausgebildet ist, die einen weiten Abschnitt und einen engen Abschnitt aufweist. Ein Vorsprung des Energiespeichers kann durch den weiteren Bereich hindurch geführt werden und dann entlang der Öffnung verschoben werden, sodass der Vorsprung den engeren Abschnitt der Öffnung hintergreift. Der Vorsprung des Energiespeichers kann zu diesem Zweck pilzförmig gestaltet sein. Dies bedeutet, dass der Vorsprung einen schmaleren Abschnitt aufweist, der im verbundenen Zustand in der Ebene der Öffnung angeordnet ist, sowie einen breiteren Abschnitt aufweist, der sich an den schmaleren Abschnitt anschließt. Die Richtungen, entlang der Vorsprung durch die Öffnungen hindurchgeführt wird, kann verschieden sein von der Richtung, mit der der Vorsprung entlang der Öffnung verschoben wird. Insbesondere können die beiden Richtungen einen rechten Winkel miteinander einschließen.

Für eine sichere Verbindung kann der Energiespeicher eine Mehrzahl solcher Vorsprünge umfassen. Das Strukturbauteil kann eine Mehrzahl entsprechender Öffnungen aufweisen. Die Vorsprünge und die Öffnungen können so aufeinander abgestimmt sein, dass alle Vorsprünge parallel durch die weiten Abschnitte der Öffnungen hindurchgeführt werden können und nach linearer Verschiebung die engen Abschnitte der Öffnungen hintergreifen. Insbesondere kann der Energiespeicher mindestens vier Vorsprünge, weiter vorzugsweise sechs Vorsprünge umfassen. Die Vorsprünge können entlang der Seiten eines Rechtecks angeordnet sein.

Das Verriegelungselement kann mit dem Energiespeicher verbunden sein. Es kann eine Schiebeführung vorgesehen sein, über die das Verriegelungselement relativ zu dem Energiespeicher verschiebbar ist. Die Schiebeführung kann parallel zu den Vorsprüngen des Energiespeichers ausgerichtet sein. In dem Strukturbauteil kann eine Öffnung ausgebildet sein, in die das Verriegelungselement eingreift, wenn es in seiner Betriebsposition ist. Wenn das Verriegelungselement in die Öffnung eingreift, kann der Energiespeicher nicht relativ zu dem Strukturbauteil verschoben werden, sodass der Energiespeicher in seiner Betriebsposition gesichert ist. Mit dem Bewegen des Verriegelungselements in die Wartungsposition kann das Verriegelungselement aus der Öffnung in dem Strukturbauteil herausgezogen werden, sodass eine Bewegung des Energiespeichers relativ zu dem Strukturbauteil möglich wird.

Die Entnahme von Energie aus dem Energiespeicher erfolgt über einen Speicherstecker, der Leistungsanschlüsse und Steueranschlüsse umfassen kann. Über die Leistungsanschlüsse wird die Energie für den Antrieb der Rotoren geleitet. Über die Steueranschlüsse können beispielsweise Informationen über den Zustand des Energiespeichers übermittelt werden. Der Speicherstecker kann eine Mehrzahl von Steckkontakten umfassen, die sich in einer Einsteckrichtung erstrecken. Der Speicherstecker kann in Einsteckrichtung an den Energiespeicher herangeführt werden, um den Speicherstecker mit den Anschlusskontakten des Energiespeichers in Eingriff zu bringen.

Möglich ist auch, dass über die Steueranschlüsse eine Information übermittelt wird, ob der Energiespeicher ordnungsgemäß angeschlossen ist. Die übermittelte Information kann sich auf die mechanische Verbindung beziehen und/oder auf die Anschlussverbindung, über die die Energie geleitet wird. Das Fluggerät kann Sensoren umfassen, über die die erforderlichen Informationen gewonnen werden. Das Fluggerät kann so eingerichtet sein, dass ein Start nur möglich ist, wenn eine Bestätigung über den ordnungsgemäßen Anschluss des Energiespeichers vorliegt.

Das Fluggerät kann eine Steckersicherung umfassen, die in einem verriegelten Zustand den Speicherstecker, der an den Energiespeicher angeschlossen ist, in diesem Zustand sichert. Die Steckersicherung kann insbesondere so eingerichtet sein, dass der Stecker nicht entgegen der Einsteckrichtung von dem Energiespeicher abgezogen werden kann. In einem entriegelten Zustand kann die Steckersicherung den Speicherstecker freigeben, sodass der Speicherstecker entgegen der Einsteckrichtung von dem Energiespeicher abgezogen werden kann.

Die Steckersicherung kann so eingerichtet sein, dass sie ihrerseits gegenüber dem Fluggerät verriegelt ist, wenn der Speicherstecker mit dem Energiespeicher in Eingriff steht und die Steckersicherung im gesicherten Zustand ist. Es ist dann nicht möglich, die Steckersicherung in den entriegelten Zustand zu bringen, ohne zuvor die Sicherung der Steckersicherung zu öffnen.

Es kann ein Rastelement vorgesehen sein, das beim Verriegeln der Steckersicherung elastisch gespannt wird und einrastet, sobald die Steckersicherung im verriegelten Zustand ist. Die Sicherung der Steckersicherung kann eine Schrägfläche umfassen, entlang der das Rastelement beim Verriegeln der Steckersicherung geführt wird, um das Rastelement elastisch zu spannen. Die Sicherung der Steckersicherung kann ein manuelles Betätigungselement umfassen, um das Rastelement zu spannen. Das manuelle Spannen des Rastelements kann dazu dienen, die Sicherung der Steckersicherung zu lösen. Nach dem Lösen der Sicherung der Steckersicherung kann auch die Steckersicherung selbst gelöst werden, sodass der Speicherstecker von dem Energiespeicher abgezogen werden kann.

Das Rastelement kann an dem Verriegelungselement ausgebildet sein. Das Rastelement kann in einer zu der Schiebeführung des Verriegelungselements senkrechten Richtung gegenüber dem Verriegelungselement vorspringen. Im Wartungszustand des Verriegelungselements kann das Rastelement so angeordnet sein, dass beim Heranführen des Speichersteckers an den Energiespeicher ein Element des Speichersteckers an dem Rastelement anstößt, bevor der Speicherstecker in Volleingriff mit dem Energiespeicher ist. Das Rastelement kann so eingerichtet sein, dass es nur in Betriebsposition des Verriegelungselements mit der Steckersicherung einrasten kann.

Im Betriebszustand des Verriegelungselements kann die Rastnase so angeordnet sein, dass sie beim Heranführen des Speichersteckers an den Energiespeicher ein Element des Speichersteckers hintergreift, sobald der Speicherstecker in Volleingriff mit dem Energiespeicher ist. Die Rastnase kann starr mit dem Verriegelungselement verbunden sein. Der Speicherstecker kann ein Element umfassen, das durch den Kontakt mit der Rastnase elastisch zur Seite geschoben wird, bevor die Rastnase das Element hintergreift.

Die Steckersicherung kann einen Schwenkhebel umfassen, der relativ zu dem Speicherstecker schwenkbar gelagert ist. Die Achse des Schwenkhebels kann senkrecht zur Einsteckrichtung des Speichersteckers ausgerichtet sein. Der Schwenkhebel kann eine Nase umfassen, die im verriegelten Zustand des Speichersteckers ein Element des Energiespeichers und/oder des Strukturbauteils des Fluggeräts hintergreift. Die Nase kann sich im verriegelten Zustand des Speichersteckers im Wesentlichen senkrecht zur Einsteckrichtung des Speichersteckers erstrecken. Im entriegelten Zustand des Speichersteckers kann die Nase im Wesentlichen parallel zur Einsteckrichtung ausgerichtet sein. Der Schwenkhebel kann eine erste Nase und eine zweite Nase umfassen. Die erste Nase und die zweite Nase können so angeordnet sein, dass sie die Versorgungskontakte des Speichersteckers zwischen sich einschließen.

Der Speicherstecker ist in Volleingriff mit dem Energiespeicher, wenn die Versorgungskontakte des Speichersteckers bis in ihre Endposition in die Versorgungskontakte des Energiespeichers eingesteckt sind und die Steckersicherung im verriegelten Zustand ist. Im gelösten Zustand des Speichersteckers ist die Steckersicherung im entriegelten Zustand und sind die Versorgungskontakte vollständig voneinander getrennt.

Es kann Zwischenpositionen zwischen dem Volleingriff und dem gelösten Zustand geben, in denen die Versorgungskontakte teilweise in Eingriff stehen und/oder die Steckersicherung teilweise verriegelt ist. Gemäß der Erfindung ist ein Volleingriff des Speichersteckers nicht möglich, solange das Verriegelungselement des Energiespeichers in seiner Wartungsposition ist. Dies kann dadurch erreicht werden, dass die Steckersicherung auf ihrem Weg vom entriegelten Zustand zum fertigen Zustand an dem Verriegelungselement des Energiespeichers anstößt, wenn das Verriegelungselement in der Wartungsposition ist. Die Steckersicherung kann insbesondere so eingerichtet sein, dass sie an dem Verriegelungselement des Energiespeichers anstößt, bevor die Versorgungskontakte des Speichersteckers mit den Versorgungskontakten des Energiespeichers in Eingriff kommen. Solange kein Kontakt besteht, kann das Fluggerät nicht gestartet werden. Mit dem Verriegelungselement des Energiespeichers in Wartungsposition ist damit sicher verhindert, dass das Fluggerät in Betrieb genommen werden kann.

Das erfindungsgemäße Fluggerät kann dazu ausgelegt sein, einen ersten Energiespeicher und einen zweiten Energiespeicher aufzunehmen. Jeder der Energiespeicher kann auf die erfindungsgemäße Weise mit dem Fluggerät verbunden werden und angeschlossen werden. Die Energiespeicher können einzeln von dem Fluggerät gelöst werden und ausgetauscht werden.

Der erste Energiespeicher und der zweiten Energiespeicher können symmetrisch zueinander gestaltet sein, sodass jeder Energiespeicher wahlweise entweder an einer ersten Aufnahme oder eine zweiten Aufnahme des Fluggeräts angeschlossen werden kann. Die Symmetrie kann insbesondere derart sein, dass der Anschluss des Energiespeichers an die erste Aufnahme über eine Oberseite des Energiespeichers erfolgt und dass der Anschluss des Energiespeichers an die zweite Aufnahme über eine Unterseite des Energiespeichers erfolgt. Der Energiespeicher kann dazu sowohl auf seiner Oberseite als auch auf seiner Unterseite mit einer Anordnung erfindungsgemäßer Vorsprünge versehen sein. Das Verriegelungselement kann so gestaltet sein, dass es in einer ersten Position mit dem Strukturbauteil verriegelt, wenn der Energiespeicher über seine Oberseite angeschlossen ist, und dass es in einer zweiten Position mit dem Strukturbauteil verriegelt, wenn der Energiespeicher über seine Unterseite angeschlossen ist. Oberseite und Unterseite bezeichnen gegenüberliegende Seiten, ohne dass damit eine Einschränkung in Bezug auf die tatsächliche Ausrichtung des Energiespeichers verbunden ist.

Anstatt eines zweiten Energiespeichers kann eine andere Einrichtung mit dem Fluggerät verbunden werden, wobei die mechanische Verbindung mit dem Strukturbauteil auf analoge Weise erfolgen kann wie bei dem erfindungsgemäßen Energiespeicher. Bei der Einrichtung kann es sich beispielsweise um einen Generator handeln, mit dem elektrische Energie zum Antrieb des Rotors bereitgestellt wird. Der Generator kann mit einem Brennstoff betrieben werden. Durch die Kombination aus einem erfindungsgemäßen Energiespeicher mit einem Generator kann das Fluggerät flexibler verwendet werden.

Das Fluggerät kann nach Art eines Helikopters gestaltet sein, bei dem einer oder mehrere Rotoren um eine im Wesentlichen vertikale Achse drehen. Der Begriff Rotor enthält jedoch keine Einschränkung auf eine bestimmte Ausrichtung der Achse. Umfasst ist beispielsweise auch ein Propeller mit im Wesentlichen horizontaler Achse.

Der Begriff Energiespeicher versteht sich als Oberbegriff für verschiedene Einrichtungen, in denen Energie zum Antrieb eines Rotors gespeichert werden kann. Bei der gespeicherten Energie kann es sich insbesondere um elektrische Energie handeln, sodass der Energiespeicher eine Batterie ist. Der Speicherstecker ist dann ein Batteriestecker und die Versorgungskontakte sind elektrische Kontakte.

Die Erfindung betrifft außerdem einen für ein solches Fluggerät geeigneten Energiespeicher. Der Energiespeicher umfasst ein Verriegelungselement, das über eine Schiebeführung relativ zu dem Energiespeicher gelagert ist. An dem Verriegelungselement ist ein Rastelement ausgebildet, das in einer zu der Schiebeführung senkrechten Richtung gegenüber dem Verriegelungselement vorspringt. Der Energiespeicher kann mit weiteren Merkmalen fortgebildet werden, die im Zusammenhang des erfindungsgemäßen Fluggeräts oder im Zusammenhang des erfindungsgemäßen Verfahrens beschrieben sind.

Die Erfindung betrifft außerdem ein Verfahren zum Anschließen eines Energiespeichers an ein unbemanntes Fluggerät. Bei dem Verfahren wird ein Energiespeicher mechanisch mit dem Fluggerät verbunden. Ein Verriegelungselement wird betätigt, um die mechanische Verbindung zwischen dem Energiespeicher und dem Fluggerät zu sichern. Ein Speicherstecker wird mit dem Energiespeicher verbunden. Eine Steckersicherung wird betätigt, um den Speicherstecker relativ zu dem Energiespeicher zu sichern, wobei ein Betätigen der Steckersicherung nur dann möglich ist, wenn zuvor das Verriegelungselement betätigt wurde. Das Verfahren kann mit weiteren Merkmalen fortgebildet werden, die im Zusammenhang des erfindungsgemäßen Fluggeräts oder der erfindungsgemäßen Batterie beschrieben sind.

Das erfindungsgemäße Fluggerät kann mit weiteren Merkmalen fortgebildet werden, die im Zusammenhang des erfindungsgemäßen Verfahrens oder des erfindungsgemäßen Energiespeichers beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein erfindungsgemäßes unbemanntes Fluggerät;
- Fig. 2:: eine erfindungsgemäße Batterie;
- Fig. 3:: eine Ansicht von oben auf die Batterie gemäß Fig. 2;
- Fig. 4:: eine Ansicht von oben auf ein Strukturbauteil des Fluggeräts gemäß Fig. 1;
- Fig. 5:: eine erfindungsgemäße Batterie und ein Strukturbauteil in einer Seitenansicht;
- Fig. 6:: die Ansicht gemäß Fig. 5 in einem anderen Zustand der Batterie;
- Fig. 7:: eine Ansicht von oben auf einen erfindungsgemäßen Batteriestecker;
- Fig. 8:: die Ansicht gemäß Fig. 7 in einem anderen Zustand des Batteriesteckers;
- Fig. 9:: eine Seitenansicht des Batteriesteckers gemäß Fig. 8;
- Fig. 10:: eine Ansicht von oben auf das Strukturbauteil mit daran befestigter Batterie und mit Batteriestecker in Teileingriff; und
- Fig. 11:: die Ansicht gemäß Fig. 10 mit Batteriestecker in Volleingriff.

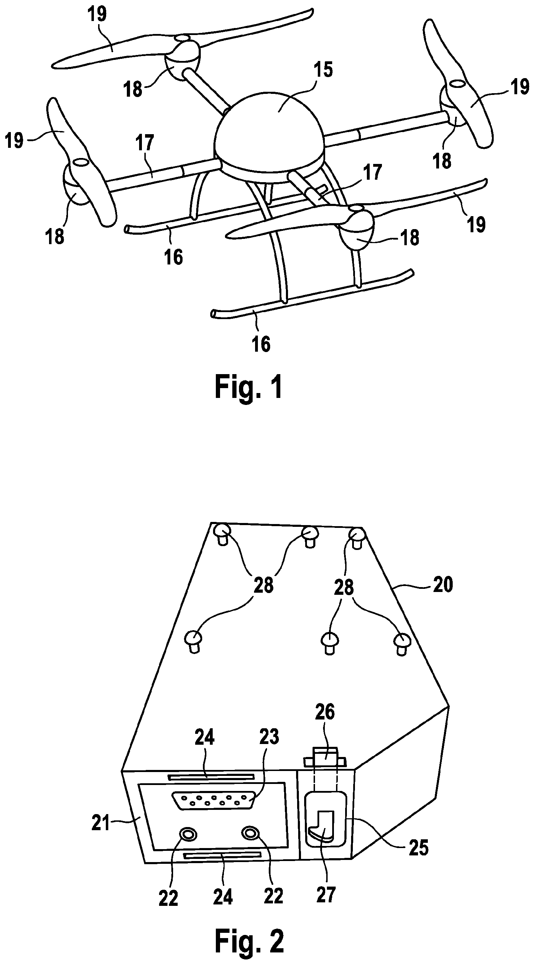

Ein in Fig. 1 gezeigtes unbemanntes Fluggerät umfasst einen Rumpfkörper 15 mit Kufen 16, auf denen das Fluggerät steht, wenn es am Boden ist. Von dem Rumpfkörper 15 erstrecken sich vier Tragstreben 17 nach außen. Am äußeren Ende jeder Tragstrebe 17 ist ein Antriebsmotor 18 zum Antrieb eines Rotors 19 angeordnet. Zum Start werden die Rotoren 19 in gegenläufige Drehung versetzt, sodass das Fluggerät senkrecht nach oben abhebt. Durch geeignete Ansteuerung der Antriebsmotoren 18 kann das Fluggerät dann gezielt entlang gewünschter Flugbahnen gesteuert werden.

Bei den Antriebsmotoren 18 handelt es sich um Elektromotoren. Die elektrische Energie für den Betrieb der Antriebsmotoren 18 wird bereitgestellt von einem Energiespeicher in Form einer Batterie 20, die im Inneren des Rumpfkörpers 15 aufgenommen ist. Über eine Steuereinheit des Fluggeräts (nicht dargestellt) wird sichergestellt, dass jeweils die wünschte Menge an elektrischer Energie zu den Antriebsmotoren 18 geleitet wird.

Die Batterie 20 umfasst eine Anschlussplatte 21, in der die elektrischen Anschlüsse der Batterie 20 ausgebildet sind.

Die elektrischen Anschlüsse umfassen zwei Leistungsanschlüsse 22 und einen Steueranschluss 23, der eine Mehrzahl von Polen umfasst. Über die Leistungsanschlüsse 22 wird die elektrische Energie abgegriffen, die zu den Antriebsmotoren 18 geleitet wird. Über den Steueranschluss 23 kann der Zustand der Batterie überwacht werden. Insbesondere kann über den Steueranschluss 23 der Ladezustand der Batterie 20 ermittelt werden, sodass sichergestellt werden kann, dass das Fluggerät rechtzeitig wieder landet, bevor die Batterie 20 leer ist. Außerdem kann über den Steueranschluss 23 eine Information übermittelt werden, ob die Batterie 20 sowohl mechanisch als auch elektrisch richtig angeschlossen ist. In der Anschlussplatte sind zudem zwei Schlitze 24 ausgebildet, die der Verriegelung eines in Fig. 2 nicht dargestellten Batteriesteckers dienen.

Die Batterie 20 umfasst außerdem ein Verriegelungselement 25, das in senkrechter Richtung relativ zu dem Gehäuse der Batterie 20 verschiebbar ist. Das Verriegelungselement 25 umfasst einen Riegel 26, der nach oben aus dem Batteriegehäuse herausragt. Das Verriegelungselement 25 umfasst außerdem eine Rastnase 27, die von dem Verriegelungselement 25 in seitlicher Richtung vorspringt. Wird das Verriegelungselement 25 nach oben oder unten verschoben, so bewegen sich der Riegel 26 und die Rastnase 27 zusammen mit dem Verriegelungselement 25.

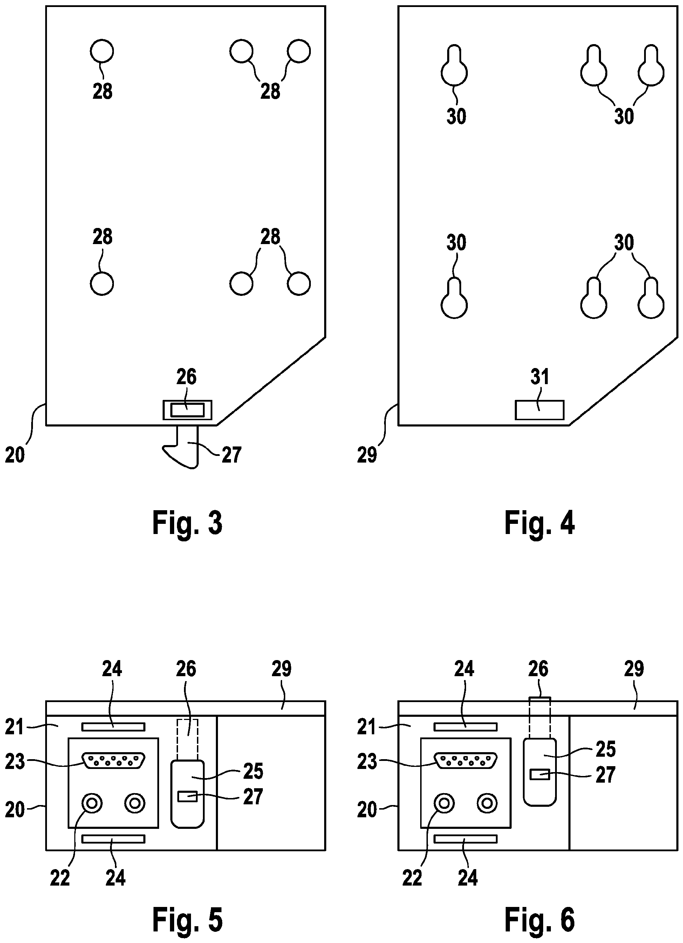

Die Batterie 20 umfasst außerdem sechs Vorsprünge 28, die von der Oberseite der Batterie 20 pilzförmig nach oben vorspringen. Die Vorsprünge 28 dienen der mechanischen Verbindung mit einem in Fig. 4 gezeigten Strukturbauteil 29 des Fluggeräts. In dem Strukturbauteil 29 sind Öffnungen 30 ausgebildet, die in einem zu den Vorsprüngen 28 der Batterie 20 passenden Muster angeordnet sind. Die Öffnungen 30 umfassen jeweils einen weiten Abschnitt und einen engen Abschnitt, die jeweils in der gleichen Richtung ausgerichtet sind. Die Köpfe der Vorsprünge 28 können durch die weiten Abschnitte der Öffnungen 30 hindurchgeführt werden und dann parallel zu dem Strukturbauteil 29 in Richtung der engen Abschnitte der Öffnungen 30 verschoben werden, sodass die Köpfe der Vorsprünge 28 die Öffnungen 30 hintergreifen. In diesem Zustand ist die Batterie 20 mechanisch mit dem Strukturbauteil 29 verbunden.

Zum Lösen der Batterie 20 von dem Strukturbauteil 29 muss die Batterie 20 zunächst linear relativ zu dem Strukturbauteil 29 verschoben werden. Mit dem Verriegelungselement 25 der Batterie 20 kann diese lineare Bewegung blockiert werden, wodurch ein unbeabsichtigtes Lösen der Batterie 20 von dem Strukturbauteil 29 ausgeschlossen wird. Das Verriegelungselement 25 wird dazu aus seiner unteren Position (Fig. 5) in seine obere Position (Fig. 6) geschoben, sodass der Riegel 26 in eine Öffnung 31 des Strukturbauteils 29 eingreift. Dies entspricht der mechanischen Verbindung zwischen der Batterie 20 und dem Strukturbauteil 29, wenn das erfindungsgemäße Fluggerät flugbereit ist.

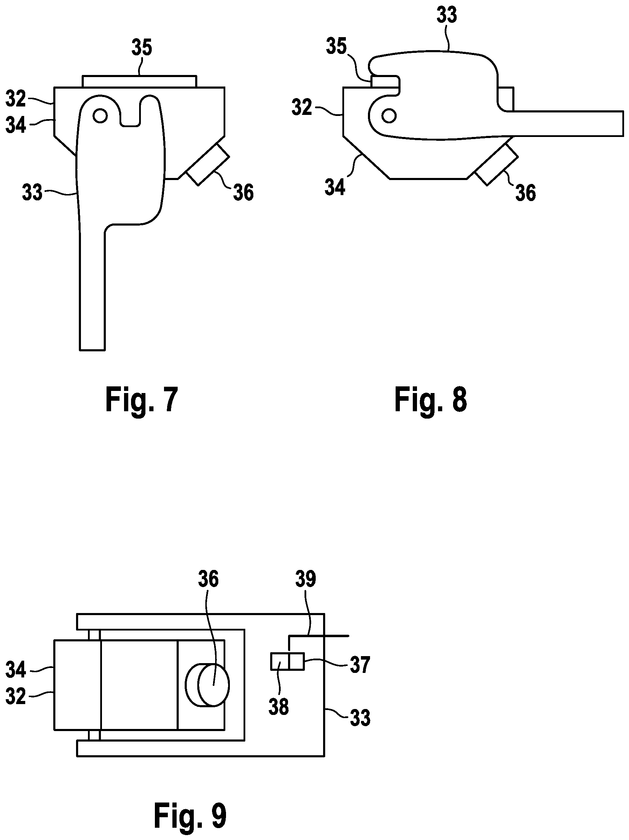

Die elektrische Verbindung zwischen der Batterie 20 und dem Fluggerät wird über einen in den Figuren 7 bis 9 gezeigten Batteriestecker 32 hergestellt. Der Batteriestecker 32 ist mit zu der Batterie 20 passenden elektrischen Anschlusskontakten 35 ausgestattet, die über einen Ausgang 36 des Batteriesteckers 32 an ein nicht dargestelltes Kabel angeschlossen sind.

Der Batteriestecker 32 umfasst einen Schwenkhebel 33, der schwenkbar relativ zu einem Steckergehäuse 34 gelagert ist. In Fig. 7 ist der Zustand des Schwenkhebels 33 gezeigt, in dem der Batteriestecker 32 mit der Anschlussplatte 21 verbunden werden kann. Die Fig. 8 zeigt den verriegelten Zustand des Batteriesteckers 32, in dem der Schwenkhebel 33 so geschwenkt ist, dass er die Schlitze 24 in der Anschlussplatte 21 der Batterie 20 hintergreifen kann.

In dem Griffabschnitt des Schwenkhebels 33 ist eine Durchgangsöffnung 37 ausgebildet. Die Durchgangsöffnung 37 ist so bemessen, dass die Rastnase 27 des Verriegelungselements 25 der Batterie 20 durch die Durchgangsöffnung 37 hindurchgeführt werden kann. In der Durchgangsöffnung 37 ist ein Stift 38 angeordnet, der quer zu seiner Längsrichtung beweglich gelagert ist. Wird die Rastnase 27 durch die Durchgangsöffnung 37 hindurchgeführt, wird der Stift 38 durch die Rastnase 27 elastisch zur Seite gedrückt, bis die Rastnase 27 den Stift 38 hintergreifen kann und der Stift 38 in seine Ausgangsposition zurückschnellt. Um die Rastnase 27 wieder aus der Durchgangsöffnung 37 zu lösen, kann der Stift 38 mit einem Betätigungselement 39 zur Seite gedrückt werden, sodass der Stift 38 nicht mehr von der Rastnase 27 hintergriffen wird.

Um den Batteriestecker 32 mit der Batterie 20 zu verbinden, wird der Batteriestecker 32 zunächst in Einsteckrichtung an die Batterie 20 herangeführt, um die elektrischen Anschlusskontakte 35 des Batteriesteckers 32 mit den elektrischen Anschlüssen 22, 23 der Batterie 20 in Eingriff zu bringen. Der Schwenkhebel 33 ist dabei in der in Fig. 7 gezeigten Position. Zum Verriegeln des Batteriesteckers 32 wird der Schwenkhebel in die Fig. 8 gezeigte Position geschwenkt, sodass der Schwenkhebel 33 die Schlitze 24 in der Anschlussplatte 21 der Batterie 20 hintergreift. Mit der dieser Bewegung des Schwenkhebels 33 wird der Batteriestecker 32 weiter an die Batterie 20 herangezogen, so dass die Anschlusskontakte 35 des Batteriesteckers 32 in Volleingriff mit den elektrischen Anschlüssen 22, 23 der Batterie 20 gebracht werden. Während dieser Schwenkbewegung tritt außerdem die Rastnase 27 in die Durchgangsöffnung 37 des Schwenkhebels 33 ein und die Rastnase 27 rastet hinter dem Stift 38 ein. Der Batteriestecker 32 ist dann sicher mit der Batterie 20 verriegelt. Ein unbeabsichtigtes Lösen ist nicht möglich.

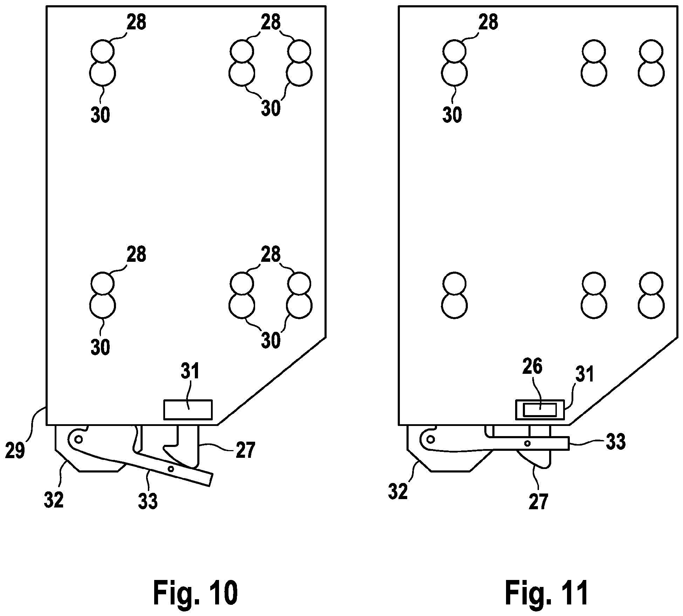

Gemäß Fig. 10 kann die Rastnase 27 nicht in die Durchgangsöffnung 37 eingreifen, wenn das Verriegelungselement 25 in seine untere Position geschoben ist. Der Schwenkhebel 33 stößt an der Rastnase 27 an und ein Volleingriff des Batteriesteckers 32 in die Batterie 20 ist nicht möglich. In Fig. 11 ist der Zustand gezeigt, in dem das Verriegelungselement 25 in seine obere Position geschoben ist und die Rastnase 27 mit dem Schwenkhebel 33 in Eingriff steht. In diesem Zustand steht der Batteriestecker 32 in Volleingriff mit der Batterie 20.

Bei der Verwendung des erfindungsgemäßen Fluggeräts wird nach einer gewissen Flugdauer über den Steueranschluss 23 der Batterie 20 die Information übermittelt, dass der Energievorrat der Batterie 20 zur Neige geht. Das Fluggerät wird daraufhin seinen Flug beenden und wieder landen. Um das Fluggerät schnell wieder flugbereit zu machen, kann eine Bedienperson die entladene Batterie 20 durch eine baugleiche frisch aufgeladene Batterie 20 ersetzen.

Dazu löst die Bedienperson zunächst eine Abdeckung von dem Rumpfkörper 15 des Fluggeräts oder öffnet eine Klappe, sodass die im Inneren des Rumpfkörpers 15 angeordnete Batterie 20 zugänglich wird. Mit dem Betätigungselement 39 wird der Stift 38 des Batteriesteckers 32 zur Seite geschoben, sodass der Schwenkhebel 33 von der Rastnase 27 gelöst werden kann. Der Schwenkhebel 33 wird in die in Fig. 7 gezeigte Position geschwenkt und der Batteriestecker 32 entgegen der Einsteckrichtung von der Batterie 20 abgezogen.

Das Verriegelungselement 25 der Batterie 20 wird in seine untere Position geschoben, sodass der Riegel 26 nicht mehr in die Öffnung 31 des Strukturbauteils 29 eingreift. Die Batterie 20 kann dann linear relativ zu dem Strukturbauteil 29 verschoben werden, sodass die Köpfe der Vorsprünge 28 in dem weiten Abschnitt der Öffnungen 30 angeordnet sind. Die Vorsprünge 28 können dann in einer zu der vorangegangenen Bewegung senkrechten Richtung aus den Öffnungen 30 herausgezogen werden, sodass die Batterie von dem Strukturbauteil 29 gelöst ist.

Das Befestigen der baugleichen frisch aufgeladenen Batterie 20 an dem Strukturbauteil 29 geschieht in umgekehrter Reihenfolge. Die Batterie 20 wird an das Strukturbauteil 29 herangeführt und die Vorsprünge 28 mit den Öffnungen 30 in Eingriff gebracht. Das Verriegelungselement 25 wird in seine obere Position geschoben, sodass der Riegel 26 in die Öffnung 31 des Strukturbauteils 29 eingreift. Der Batteriestecker 32 wird in Einsteckrichtung an die Batterie 20 herangeführt, sodass die elektrischen Kontakte in Eingriff kommen. Der Schwenkhebel 33 wird von der in Fig. 7 gezeigten Position in die in Fig. 8 gezeigte Position geschwenkt, um den Batteriestecker 32 mit der Batterie 20 zu verriegeln. Mit der Schwenkbewegung dringt die Rastnase 27 in den Schwenkhebel 33 ein und rastet hinter dem Stift 38 ein.

Das Einrasten der Rastnase 27 in den Schwenkhebel 33 setzt voraus, dass das Verriegelungselement 24 der Batterie 20 in seine obere Position geschoben ist. Ist dies nicht der Fall, stößt der Schwenkhebel 33 an der Rastnase 27 an und ein Volleingriff des Batteriesteckers 32 mit der Batterie 20 ist nicht möglich. Umgekehrt bedeutet dies, dass ein Volleingriff des Batteriesteckers 32 gewährleistet ist, wenn die mechanische Verbindung zwischen der Batterie 20 und dem Strukturbauteil 29 vollständig gesichert ist. Durch die Erfindung wird es also möglich, dass die Bedienperson mit einem Blick kontrollieren kann, dass die Batterie 20 sowohl mechanisch als auch elektrisch richtig verbunden ist.

In den Figuren ist ein hängender Einbau der Batterie 20 dargestellt, bei dem die Batterie 20 über die Vorsprünge 28 an dem Strukturbauteil 29 aufgehängt ist. Ebenso gut möglich ist ein liegender Einbau der Batterie, bei dem die Batterie 20 auf dem Strukturbauteil 29 aufliegt, oder ein stehender Einbau, bei dem die Batterie 20 seitlich an dem Strukturbauteil 29 hängt. Die Anordnung der Elemente ist dann im Wesentlichen umgekehrt wie in den Figuren dargestellt bzw. um 90° verdreht verglichen mit der Darstellung in der Figur.

## Patentansprüche

1. Unbemanntes Fluggerät mit einem Energiespeicher (20), der lösbar mit einem Strukturbauteil (29) des Fluggeräts verbunden ist, und mit einem Speicherstecker (32), über den elektrische Energie von dem Energiespeicher (20) zu einem Rotorantrieb (18) des Fluggeräts geleitet wird, und mit einem Verriegelungselement (25), das in einer Betriebsposition den Energiespeicher (20) gegenüber dem Strukturbauteil (29) verriegelt und das in einer Wartungsposition den Energiespeicher (20) freigibt und einen Volleingriff des Speichersteckers (32) blockiert, **gekennzeichnet durch** eine Steckersicherung (33), um den Speicherstecker (32) im verbundenen Zustand zu sichern, wobei die Steckersicherung (33) auf ihrem Weg an dem Verriegelungselement (25) anstößt, wenn das Verriegelungselement (25) in der Wartungsposition ist.

2. Fluggerät nach Anspruch 1, **dadurch gekennzeichnet, dass** das Verriegelungselement (25) in Betriebsposition eine lineare Bewegung des Energiespeichers (20) relativ zu dem Strukturbauteil (29) sperrt.

3. Fluggerät nach Anspruch 1 oder 2, **dadurch gekennzeichnet, dass** in dem Strukturbauteil (29) eine Öffnung (30) ausgebildet ist, die einen weiten Abschnitt und einen engen Abschnitt aufweist, und dass der Energiespeicher (20) einen Vorsprung (28), der durch den weiten Bereich der Öffnung (30) hindurchgeführt werden kann.

4. Fluggerät nach Anspruch 3, **dadurch gekennzeichnet, dass** das Strukturbauteil (29) eine Mehrzahl von Öffnungen (30) aufweist und dass der Energiespeicher (20) eine Mehrzahl von Vorsprüngen (28) umfasst.

5. Fluggerät nach einem der Ansprüche 1 bis 4, **dadurch gekennzeichnet, dass** das Verriegelungselement (25) über eine Schiebeführung mit dem Energiespeicher (20) verbunden ist.

6. Fluggerät nach Anspruch 5, **dadurch gekennzeichnet, dass** die Schiebeführung parallel zu den Vorsprüngen (28) des Energiespeichers (20) ausgerichtet ist.

7. Fluggerät nach einem der Ansprüche 1 bis 6, **dadurch gekennzeichnet, dass** in dem Strukturbauteil (29) eine Öffnung (31) ausgebildet ist, in die das Verriegelungselement (25) in Betriebsposition eingreift.

8. Fluggerät nach einem der Ansprüche 1 bis 7, **dadurch gekennzeichnet, dass** die Steckersicherung (33) im gesicherten Zustand mit dem Verriegelungselement (25) verriegelt ist.

9. Fluggerät nach Anspruch 8, **dadurch gekennzeichnet, dass** das Verriegelungselement (25) ein Rastelement (27) aufweist, das mit der Steckersicherung (33) einrastet.

10. Fluggerät nach Anspruch 9, **dadurch gekennzeichnet, dass** das Rastelement (27) nur in Betriebsposition des Verriegelungselements (25) mit der Steckersicherung (33) einrasten kann.

11. Fluggerät nach einem der Ansprüche 1 bis 10, **dadurch gekennzeichnet, dass** der Energiespeicher (20) dazu ausgelegt ist, wahlweise über seine Oberseite mit einer ersten Aufnahme des Strukturbauteils (29) oder über seine Unterseite mit einer zweiten Aufnahme des Strukturbauteils (29) verbunden zu werden.

12. Verfahren zum Anschließen eines Energiespeichers (20) an ein unbemanntes Fluggerät, bei dem ein Energiespeicher (20) mechanisch mit dem Fluggerät verbunden wird, bei dem ein Verriegelungselement (25) betätigt wird, um die mechanische Verbindung zwischen dem Energiespeicher (20) und dem Fluggerät zu sichern, bei dem ein Speicherstecker (32) mit dem Energiespeicher (20) verbunden wird, bei dem eine Steckersicherung (33) betätigt wird, um den Speicherstecker (32) relativ zu dem Energiespeicher (20) zu sichern, wobei ein Betätigen der Steckersicherung (33) nur dann möglich ist, wenn zuvor das Verriegelungselement (25) betätigt wurde.

## Claims

1. An unmanned aerial vehicle with an energy accumulator (20), which is connected releasably to a structural component (29) of the aerial vehicle, and with an accumulator plug (32), via which electrical energy is conducted from the energy accumulator (20) to a rotor drive (18) of the aerial vehicle, and with a locking element (25) which, in an operating position, locks the energy accumulator (20) in relation to the structural component (29) and which, in a maintenance position, releases the energy accumulator (20) and blocks a full engagement of the accumulator plug (32), **characterized by** a plug securing mechanism (33) in order to secure the accumulator plug (32) in the connected state, wherein the plug securing mechanism (33) is configured in such a manner that, on its actuating path, it strikes against the locking element (25) when the locking element (25) is in the maintenance position.

2. The aerial vehicle as claimed in claim 1, wherein, in the operating position, the locking element (25) blocks a linear movement of the energy accumulator (20) relative to the structural component (29).

3. The aerial vehicle as claimed in claim 1 or 2, wherein an opening (30) which has a wide portion and a narrow portion is formed in the structural component (29), and wherein the energy accumulator (20) comprises a projection (28) which can be guided through the wide region of the opening (30) .

4. The aerial vehicle as claimed in claim 3, wherein the structural component (29) has a plurality of openings (30), and wherein the energy accumulator (20) comprises a plurality of projections (28).

5. The aerial vehicle as claimed in one of claims 1 to 4, wherein the locking element (25) is connected to the energy accumulator (20) via a sliding guide.

6. The aerial vehicle as claimed in claim 5, wherein the sliding guide is oriented parallel to the projections (28) of the energy accumulator (20).

7. The aerial vehicle as claimed in one of claims 1 to 6, wherein an opening (31) in which the locking element (25) engages in the operating position is formed in the structural component (29).

8. The aerial vehicle as claimed in one of claims 1 to 7, wherein the plug securing mechanism (33) is locked with the locking element (25) in the secured state.

9. The aerial vehicle as claimed in claim 8, wherein the locking element (25) has a latching element (27) which latches to the plug securing mechanism (33) .

10. The aerial vehicle as claimed in claim 9, wherein the latching element (27) can latch to the plug securing mechanism (33) only in the operating position of the locking element (25).

11. The aerial vehicle as claimed in one of claims 1 to 10, wherein the energy accumulator (20) is configured to be connected either via its upper side to a first receptacle of the structural component (29) or via its lower side to a second receptacle of the structural component (29).

12. A method for attaching an energy accumulator (20) to an unmanned aerial vehicle, in which an energy accumulator (20) is mechanically connected to the aerial vehicle, in which a locking element (25) is actuated in order to secure the mechanical connection between the energy accumulator (20) and the aerial vehicle, in which an accumulator plug (32) is connected to the energy accumulator (20), in which a plug securing mechanism (33) is actuated in order to secure the accumulator plug (32) relative to the energy accumulator (20), wherein actuation of the plug securing mechanism (33) is possible only if the locking element (25) has been actuated previously.

## Revendications

1. Aéronef sans pilote, comprenant un accumulateur d'énergie (20) qui est relié de manière amovible avec un composant structurel (29) de l'aéronef, et comprenant une fiche d'accumulateur (32) par le biais de laquelle de l'énergie électrique est acheminée de l'accumulateur d'énergie (20) à un mécanisme d'entraînement de rotor (18) de l'aéronef, et comprenant un élément de verrouillage (25) qui, dans une position opérationnelle, verrouille l'accumulateur d'énergie (20) par rapport au composant structurel (29) et qui, dans une position de maintenance, libère l'accumulateur d'énergie (20) et bloque un engagement complet de la fiche d'accumulateur (32), **caractérisé par** un élément de sûreté de fiche (33) destiné à sécuriser la fiche d'accumulateur (32) dans l'état connecté, l'élément de sûreté de fiche (33) venant en butée contre l'élément de verrouillage (25) sur son trajet lorsque l'élément de verrouillage (25) se trouve dans la position de maintenance.

2. Aéronef selon la revendication 1, **caractérisé en ce que** l'élément de verrouillage (25), en position opérationnelle, bloque un mouvement linéaire de l'accumulateur d'énergie (20) par rapport au composant structurel (29).

3. Aéronef selon la revendication 1 ou 2, **caractérisé en ce qu'**une ouverture (30) est formée dans le composant structurel (29), laquelle possède une portion large et une portion étroite, et **en ce que** l'accumulateur d'énergie (20) une partie saillante (28), laquelle peut être passée à travers la zone large de l'ouverture (30).

4. Aéronef selon la revendication 3, **caractérisé en ce que** le composant structurel (29) possède une pluralité d'ouvertures (30) et **en ce que** l'accumulateur d'énergie (20) comporte une pluralité de parties saillantes (28).

5. Aéronef selon l'une des revendications 1 à 4, **caractérisé en ce que** l'élément de verrouillage (25) est relié à l'accumulateur d'énergie (20) par le biais d'un guide coulissant.

6. Aéronef selon la revendication 5, **caractérisé en ce que** le guide coulissant est orienté parallèlement aux parties saillantes (28) de l'accumulateur d'énergie (20).

7. Aéronef selon l'une des revendications 1 à 6, **caractérisé en ce qu'**une ouverture (31) est formée dans le composant structurel (29), dans laquelle vient en prise l'élément de verrouillage (25) dans la position opérationnelle.

8. Aéronef selon l'une des revendications 1 à 7, **caractérisé en ce qu'**à l'état sécurisé, l'élément de sûreté de fiche (33) est verrouillé avec l'élément de verrouillage (25).

9. Aéronef selon la revendication 8, **caractérisé en ce que** l'élément de verrouillage (25) possède un élément d'encliquetage (27) qui s'encliquète avec l'élément de sûreté de fiche (33).

10. Aéronef selon la revendication 9, **caractérisé en ce que** l'élément d'encliquetage (27) ne peut s'encliqueter avec l'élément de sûreté de fiche (33) que dans la position opérationnelle de l'élément de verrouillage (25).

11. Aéronef selon l'une des revendications 1 à 10, **caractérisé en ce que** l'accumulateur d'énergie (20) est conçu pour être relié sélectivement par son côté supérieur à un premier logement du composant structural (29) ou par son côté inférieur à un deuxième logement du composant structural (29).

12. Procédé de raccordement d'un accumulateur d'énergie (20) à un aéronef sans pilote, avec lequel un accumulateur d'énergie (20) est relié mécaniquement à l'aéronef, avec lequel un élément de verrouillage (25) est actionné en vue de sécuriser la liaison mécanique entre l'accumulateur d'énergie (20) et l'aéronef, avec lequel une fiche d'accumulateur (32) est reliée à un accumulateur d'énergie (20), avec lequel un élément de sûreté de fiche (33) est actionné afin de sécuriser la fiche d'accumulateur (32) par rapport à l'accumulateur d'énergie (20), un actionnement de l'élément de sûreté de fiche (33) n'étant alors possible que si l'élément de verrouillage (25) a été préalablement actionné.
